(19) Europäisches Patentamt
European Patent Office
Office européen des brevets

(11) **EP 4 668 527 A1**

(12) **EUROPEAN PATENT APPLICATION**

(43) Date of publication:
**24.12.2025 Bulletin 2025/52**

(21) Application number: **24183115.5**

(22) Date of filing: **19.06.2024**

(51) International Patent Classification (IPC):
*H02J 3/38* (2006.01)     *H02J 3/50* (2006.01)

(52) Cooperative Patent Classification (CPC):
**H02J 3/50; H02J 3/381;** H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB SCHWEIZ AG
5400 Baden (CH)**

(72) Inventors:
• **Liukkonen, Olli
  00380 Helsinki (FI)**
• **Ketola, Pekka
  00380 Helsinki (FI)**
• **Holopainen, Antti
  00380 Helsinki (FI)**
• **Lyly, Mikko
  00380 Helsinki (FI)**

(74) Representative: **Kolster Oy Ab
Salmisaarenaukio 1
P.O. Box 204
00181 Helsinki (FI)**

(54) **METHOD AND APPARATUS FOR CONTROLLING ELECTRIC SYSTEM**

(57)     A method and apparatus for controlling an electric system comprising a plurality of synchronous machines (100), the apparatus being configured to obtain a total reactive power demand for the plurality of the synchronous machines, obtain an individual active power of each of the plurality of the synchronous machines (100), and determine an individual reactive power demand for each of the plurality of the synchronous machines (100), such that a sum of the individual reactive power demands for the plurality of the synchronous machines equals to the obtained total reactive power demand and such that a total power loss of the plurality of the synchronous machines is minimized, on the basis of a predetermined individual loss model of each of the synchronous machines, wherein the individual loss model expresses a power loss of the synchronous machine as a function of active power and reactive power of the synchronous machine.

Fig. 1

EP 4 668 527 A1

**Description**

TECHNICAL FIELD

The present invention relates to a method and an apparatus for controlling an electric system and to an electric system comprising a plurality of synchronous machines.

BACKGROUND

Industrial process industry, for example, typically may include a large number of synchronous machines, e.g. motors and generators, that may be connected directly on-line. These kinds of high-power machines are widely used to run centrifugal or piston compressors or different kind of grinders and chippers, for example. Due to high capacity of today's factories, it is common that there might be several such machines running in the same site or even running in parallel in the same part of the process, for instance. Although, in case of motors, the purpose of these kind of machines may be to produce torque for the driving equipment or, in case of generators, to produce active electrical power, such machines may play some role also in reactive power balance of the whole plant, for example.

The balance between produced and consumed reactive power inside such an industrial network, or similar electric system, is in response of the network or system operator. A primary target may be to maintain the power factor in high voltage connection point to a grid, such as a national grid, between limits defined by the grid owner or operator, for example. As an example, an industrial network that includes several large synchronous machines may be connected to a national grid with a high-voltage connection at e.g. 110 kV voltage level and such a connection may also be the point where the reactive power balance is defined, for example. As an example, a SCADA (Supervisory Control And Data Acquisition) system may collect suitable measurements of the power factor in the connection point and produce a reactive power production reference to those network components that are allocated to compensate reactive power, for example.

What kind of components are available for the reactive power compensation and how those are being used, may highly depend on the network or system operator. As an example, large generators can produce a major part of the needed reactive power, but it may be unpractical to use those only. Therefore, transformer tap changers, capacitor banks and/or synchronous motors may also be used in the reactive power compensation. The control of such additional compensating devices can be done manually or automatically via DCS (Distributed Control System) or SCADA according to pre-defined rules, for instance. For example, synchronous motors, or synchronous machines in general, in the network may have a predetermined fixed reactive power (VAr) reference(s) for one or several machines and if the reactive power need in the network increases over a certain predefined threshold limit, actual reactive power control may be done with other devices such as shunt capacitors and transformer tap-chargers, for example.

A problem related to such solution is that it may lead to high system losses.

BRIEF DESCRIPTION

An object of the present invention is thus to provide a method and an apparatus for implementing the method so as to overcome the above problem or at least to alleviate the above problem. The objects of the invention are achieved by a method and an apparatus which are characterized by what is stated in the independent claims. The preferred embodiments of the invention are disclosed in the dependent claims.

The invention is based on the idea of determining an individual reactive power demand for each of a plurality of the synchronous machines, such that a sum of the individual reactive power demands for the plurality of the synchronous machines equals to a total reactive power demand and such that a total power loss of the plurality of the synchronous machines is minimized, on the basis of at least individual active powers of the plurality of the synchronous machines and a predetermined individual loss model of each of the synchronous machines, wherein the individual loss model expresses a power loss of the synchronous machine as a function of the active power and reactive power of the synchronous machine.

An advantage of the solution of the invention is that the power losses due to the reactive power production or consumption can be reduced.

BRIEF DESCRIPTION OF THE DRAWINGS

In the following the invention will be described in greater detail by means of preferred embodiments with reference to the accompanying drawings, in which

Figure 1 illustrates a diagram of an electric system according to an embodiment;
Figure 2 illustrates a diagram of an electric system according to an embodiment; and
Figure 3 illustrates an example of losses of a synchronous machine as a function of active and reactive power.

DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Different embodiments and examples may be described below using single units, models and equipment, without restricting the embodiments/examples to such a solution. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures, for instance. It should be noted that the use of the embodiments described herein is not limited to devices or systems employing any specific fundamental frequency or any specific voltage level, for example.

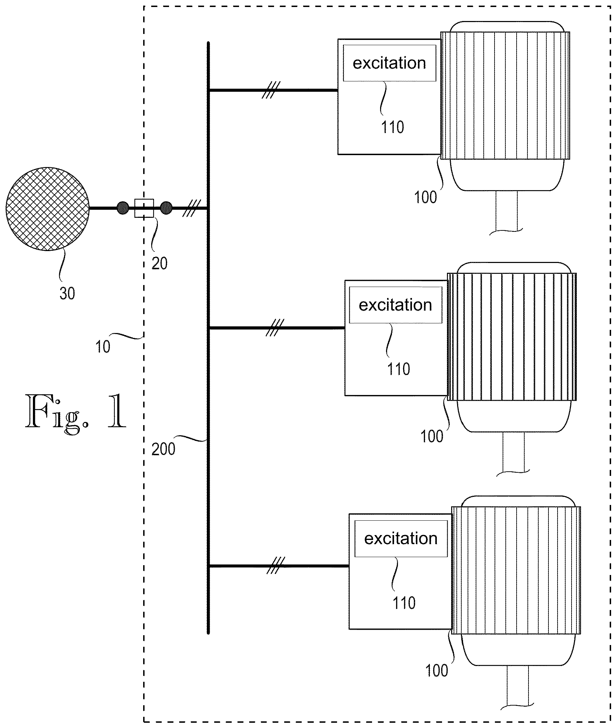

Figure 1 illustrates a simplified example of an electric system (e.g. a network) 10 comprising a plurality of synchronous (AC) machines 100. The figure shows only components necessary for understanding the various embodiments. The example configuration of the electric system 10 in Figure 1 comprises three synchronous machines 100 but the number of the synchronous machines 100 may be any number of at least two. The synchronous machines 100 are connected to a common bus 200, i.e. an electric power transmission connection, which may be a three-phase connection as illustrated, for example, and via which the synchronous machines 100 may receive and/or deliver electric (AC) power. The synchronous machines 100 may be connected in parallel with each other in the electric system 10 as in the example of Figure 1. The electric system 10 comprising the plurality of the synchronous machines 100 is further connected to an electric grid 30, such as a public electrical grid or another kind of electric network, via at least one connection point 20. Each one of the synchronous machines 100 may be a synchronous (AC) motor and/or a synchronous (AC) generator.

Figure 1 further illustrates each of the synchronous machines 100 equipped with an excitation system 110, i.e. the exemplary synchronous machines 100 are externally excited (AC) synchronous machines. The type of the excitation of any one of the synchronous machines 100 may be any suitable excitation type such as a static (stationary) excitation or a brushless (indirect) excitation, for example. Consequently, the excitation system 110 of the synchronous machine 100 may comprise one or more components such as an excitation transformer, a stationary rectifier, a stationary chopper and/or parts of a rotating exciter, for example, depending on the type of the excitation used. The excitation system 110 may obtain its operating power from the bus 200, for instance, or from another power source. Generally, the complete excitation system of the synchronous machines 100 may further include components such as an Automatic Voltage Regulator (AVR), one or more protection relays, the starting logic and the communication interfaces, for example, which have not been shown separately in the example of Figure 1 for the sake of clarity. At least some of such additional components may reside within the synchronous machine 100 or in connection therewith. It is also possible that at least some such additional components of or relating to the complete excitation system of the synchronous machine 100 may reside in one or more locations remote to the synchronous machine 100 in question. The main function of the AVR is to control the excitation current while the protection relay(s) may secure the safe operation of the system. To be able to control the excitation current such that a machine power factor (PF control) or a reactive power (VAr control) is kept in a reference value, the AVR usually includes essentially real time information about the loading of the synchronous machine, for example. This may be done e.g. by measuring the voltage and current of the synchronous machine and calculating the active and reactive power from them. Thus, the AVR or a complete excitation system can act not only as a power source but also as a measurement device that may monitor the status and/or the operation point of the synchronous machine essentially in real time. Some common control methods for the excitation of a single synchronous machine include a PF control and a VAr control. In the PF control mode, the power factor of the machine is kept in a predefined value by controlling the excitation current as a function of active power. In the VAr control mode, the excitation current is controlled as a function of reactive power. To secure stabile synchronous operation and/or to avoid overheating of the machine, under and/or over excitation limits may be used for all control methods. The possible components and control principles of such excitation systems, relating to e.g. the static or the brushless excitation (exciter), are considered known as such to a person skilled in the art and hence need not to be described in more detail herein. It should be noted that the various embodiments described herein are not limited to any particular type of synchronous machine, whether a motor and/or a generator, nor to any particular type of an excitation thereof or therefor, for example.

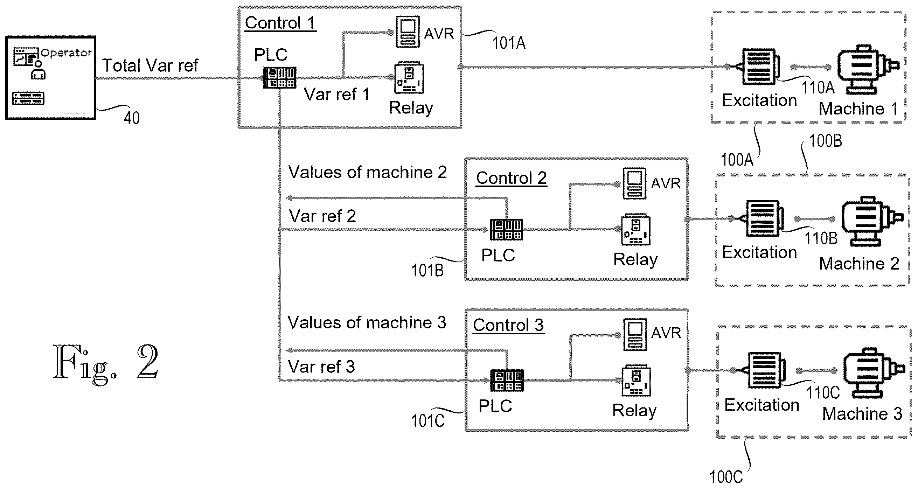

Figure 2 illustrates a simplified example of an electric system comprising a plurality of synchronous (AC) machines 100A, 100B, 100C. The electric system in the example of Figure 2 essentially corresponds to that shown in Figure 1 but instead of power connections shows signalling connections between the elements of the electric system. Figure 2 additionally shows excitation control systems (arrangements, entities) 101A, 101B, 101C for the synchronous machines 100A, 100B, 100C. The excitation control systems 101A, 101B, 101C may be physically separate from the respective synchronous machines 100A, 100B, 100C or they may be physically located in connection with the respective synchronous machines 100A, 100B, 100C, e.g. in connection with the excitation system 110A, 110B, 110C therein, for example. The excitation control systems 101A, 101B, 101C may each comprise at least a control arrangement, which in the example of Figure 2 is represented by the exemplary PLC (Programmable Logic Controller). However, another kind of controller could be used such as any kind of control arrangement generally comprising at least one processor and at least one memory, for instance. The exemplary excitation control systems 101A, 101B, 101C in the example of Figure 2 each further comprise at least one relay and an Automatic Voltage Regulator (AVR) for controlling the excitation of the respective machine. Figure 2 moreover shows an upper-level (higher-level) control system 40, such as SCADA, connected to the excitation control systems 101A, 101B, 101C. Thus, an operator or a user of the electric system, for example, can control the excitation control systems 101A, 101B, 101C via such an upper-level control system 40. The signalling connections between the elements in the example of Figure 2 could be any suitable wired and/or wireless connections employing one or more wired and/or wireless networks. Communication between the elements in the example of Figure 2 could be based on any suitable protocol(s) such as any fieldbus protocol and/or Ethernet. The functionality according to any one of the embodiments described herein or any combination thereof, such as the control of the reactive power compensation, comprising e.g. production and/or consumption of reactive power, according to the embodiments described herein, may be implemented by the excitation control systems 101A, 101B, 101C in a centralized or distributed manner, for example. It is also possible to use one or more alternative and/or further units, elements, systems and/or entities for implementing the functionality, or a part thereof, for implementing the functionality according to any one of the embodiments described herein or any combination thereof, for instance. For example, one of the excitation control systems 101A, 101B, 101C may operate as a master unit controlling the remaining units as slave units. In the example of Figure 2, the excitation control system 101A (Control 1) of the first synchronous machine 100A acts as the master controller controlling the excitation control systems 101B, 101C (Control 2, Control3) of the second synchronous machine 100B and the third synchronous machine 100C, respectively.

Generally, the active power of each synchronous machine 100, 100A, 100B, 100C depends essentially only on the shaft load while the reactive power of the same machine can be controlled by the respective excitation system 110, 110A, 110B, 110C thereof with the control provided by or via the excitation control system 101A, 101B, 101C. In the power loss point of view, the active and reactive power production may both generate loss to the system. As an example, it may be preferable to maintain the reactive power balance in the connection point(s) 20 to the grid 30 close to zero, i.e. in a situation such that essentially no reactive power flows from the grid 30 to the electric system 10 or from the electric system 10 to the grid 30. It is also possible that another kind of reactive power balance is desirable. The parallel synchronous machines 100, 100A, 100B, 100C with the excitation systems 110, 110A, 110B, 110C together with the excitation control systems 101A, 101B, 101C thereof can be considered as a one single component or entity that may be reserved for a reactive power compensation. The reactive power compensation should be understood to generally refer to providing Consequently, e.g. the upper-level control system 40, comprising e.g. a SCADA (Supervisory Control And Data Acquisition) and/or DCS (Distributed Control System) system, may create a single total reactive power reference that corresponds to a sum of the reactive power references of each synchronous machine 100 to obtain the desired reactive power balance, for example. The proposed solution according to the various embodiments thereof can generally enable to share such a total reactive power reference between the different synchronous machines such that the total losses of the system can be minimized or at least reduced.

According to an embodiment, a method for controlling the electric system, the electric system comprising a plurality of synchronous machines, comprises obtaining a total reactive power demand for the plurality of the synchronous machines, wherein the total reactive power demand indicates a total reactive power to be produced or consumed by the plurality of the synchronous machines 100. Thus, the unit or system (device, apparatus) or another entity implementing the embodiment, such as the first excitation control system 101A, may obtain, e.g. receive, from the upper-level control system 40, the total reactive power demand, Total Var ref, for the plurality of the synchronous machines 100A, 100B, 100C. The total reactive power demand (request, requirement, reference) indicating the total reactive power to be produced or consumed by the plurality of the synchronous machines 100A, 100B, 100C may thus indicate a positive reactive power, i.e. reactive power to be produced by the plurality of the synchronous machines, or a negative reactive power, i.e. reactive power to be consumed by the plurality of the synchronous machines 100A, 100B, 100C. Moreover, the method comprises in response to a magnitude of the obtained total reactive power demand being lower than a magnitude of a maximum reactive power demand able to be fulfilled by the plurality of the synchronous machines performing the following: obtaining an individual active power of each of the plurality of the synchronous machines, determining an individual reactive power demand for each of the plurality of the synchronous machines, such that a sum of the individual reactive power demands for the plurality of the synchronous machines equals to the obtained total reactive power demand and such that a total power loss of the plurality of the synchronous machines is minimized, on the basis of at least the obtained individual active powers of the plurality of the synchronous machines and a predetermined individual loss model of each of the synchronous machines, wherein the individual loss model expresses a power loss of the synchronous machine as a function of active power and reactive power of the synchronous machine, and controlling each of the plurality of the synchronous machines to fulfil the individual reactive power demand determined for the synchronous machine in question. According to an embodiment, the above steps may be repeated essentially continuously or at predetermined intervals, for example. Thus, the magnitude of the total reactive power demand obtained may be compared to the magnitude of the maximum reactive power demand able to be fulfilled by the plurality of the synchronous machines 100A, 100B, 100C. The maximum reactive power demand able to be fulfilled by the plurality of the synchronous machines 100A, 100B, 100C may be predetermined or e.g. continuously determined or updated e.g. based on information received from the synchronous machines 100A, 100B, 100C and/or from another system entity or entities, for example. The magnitude of the maximum reactive power demand able to be fulfilled by the plurality of the synchronous machines 100A, 100B, 100C may be the same or different for positive reactive power and negative reactive power. Thus, the maximum reactive power demand able to be fulfilled by the plurality of the synchronous machines 100A, 100B, 100C may be represented by a single value or two values, one for the positive reactive power and one for the negative reactive power, for instance. Consequently, the sign of the total reactive power demand may be taken into account in the comparison if necessary. Then, if the magnitude of the obtained total reactive power demand is lower than the magnitude of the maximum reactive power demand able to be fulfilled by the plurality of the synchronous machines 100A, 100B, 100C, the individual reactive power demand (request, requirement, reference), Var ref 1, Var ref 2, Var ref 3, for each of the plurality of the synchronous machines can be determined. Once the individual reactive power demand, Var ref 1, Var ref 2, Var ref 3, for each of the plurality of the synchronous machines 100A, 100B, 100C has been determined, each synchronous machine can be controlled to fulfil the individual reactive power demand determined for the synchronous machine in question. Such controlling may comprise e.g. communicating (sending) the respective individual reactive power demand, Var ref 1, Var ref 2, Var ref 3, to the excitation system 110A, 110B, 110C of the synchronous machine in question. The excitation system 110A, 110B, 110C of the synchronous machine may then adjust the individual reactive power production or consumption of the synchronous machine 100A, 100B, 100C such that it fulfils the individual reactive power demand, Var ref 1, Var ref 2, Var ref 3, for the synchronous machine in question. According to an embodiment, in response to the magnitude of the obtained total reactive power demand being equal to or higher than the magnitude of the maximum reactive power demand able to be fulfilled by the plurality of the synchronous machines controlling the plurality of the synchronous machines to fulfil the reactive power demand only up to a magnitude thereof able to be fulfilled by the plurality of the synchronous machines. Thus, if it is determined that the magnitude of the obtained total reactive power demand is equal to or higher than the magnitude of the maximum reactive power demand able to be fulfilled by the plurality of the synchronous machines 100A, 100B, 100C, it is possible to control each of the plurality of the synchronous machines 100A, 100B, 100C to produce or consume the maximum reactive power available or possible by the machine in order to fulfil the obtained total reactive power demand at least as far as possible. Alternatively, or additionally, if the magnitude of the obtained total reactive power demand is higher than the magnitude of the maximum reactive power demand able to be fulfilled by the plurality of the synchronous machines 100A, 100B, 100C it is possible to communicate to the upper-level system 40 that the total reactive power demand cannot be fulfilled and e.g. request a new total reactive power demand therefrom.

According to an embodiment, the individual loss model of the synchronous machine may be a regression model based on a set of predetermined operation points of the synchronous machine, wherein a predetermined operation point is defined by the active power, the reactive power and the power loss of the synchronous machine. According to an embodiment, the regression model may be a polynomial regression model. According to an embodiment, the polynomial regression model may be a quadratic polynomial regression model. According to an embodiment, the determining of the individual reactive power demand for each of the plurality of the synchronous machines may be performed further based on an individual reactive power limit or reactive power range of each of the plurality of the synchronous machines. According to an embodiment, the determining of the individual reactive power demand for each of the plurality of the synchronous machines is performed by optimization. According to an embodiment, the optimization may be performed by using the method of Lagrange multipliers.

Thus, the determining of the individual reactive power demand, Var ref 1, Var ref 2, Var ref 3, for each of the plurality of the synchronous machines 100A, 100B, 100C, such that a sum of the individual reactive power demands for the plurality of the synchronous machines equals to the obtained total reactive power demand, Total Var ref, and such that a total power loss of the plurality of the synchronous machines is minimized, may be performed as an optimization task utilizing a predetermined individual loss model of each of the synchronous machines, which loss model may be a regression model based on a set of predetermined operation points of the synchronous machine. According to an embodiment, the loss minimizing may be achieved by defining the regression model as a function, e.g. a polynomial function, that presents the losses of each synchronous machine 100A, 100B, 100C as a function of the active and reactive power thereof. The total losses of all the synchronous machines may be obtained as a sum of such functions. According to an embodiment, an optimization task can thus be defined accordingly e.g. such that the active power of each synchronous machine 100A, 100B, 100C is defined by the load thereof and should correspond to the active power measured by the respective AVR, for example. Moreover, the sum of the reactive power demands, Var ref 1, Var ref 2, Var ref 3, should correspond to the total reactive power demand, Total Var ref, defined or submitted e.g. by the SCADA/DCS system 40. In addition, the total losses of all synchronous machines should be essentially minimized, and the reactive power demand of each synchronous machine may be an optimization variable. When the total losses of each synchronous machine are known as a function of real and reactive power, it is possible to generate a function, e.g. a polynomial function, i.e. the regression model such as the polynomial regression model, the that describes this information with accuracy high enough.

By using such a predefined loss model, it is possible to estimate the losses of each synchronous machine based on the active and reactive power thereof. And the total losses of the electric system comprising the plurality of the synchronous machines may be obtained as a function of the produced active and reactive power in the system. Below some possible examples are given for the optimization without limiting the implementation of the solution to any such specific example.

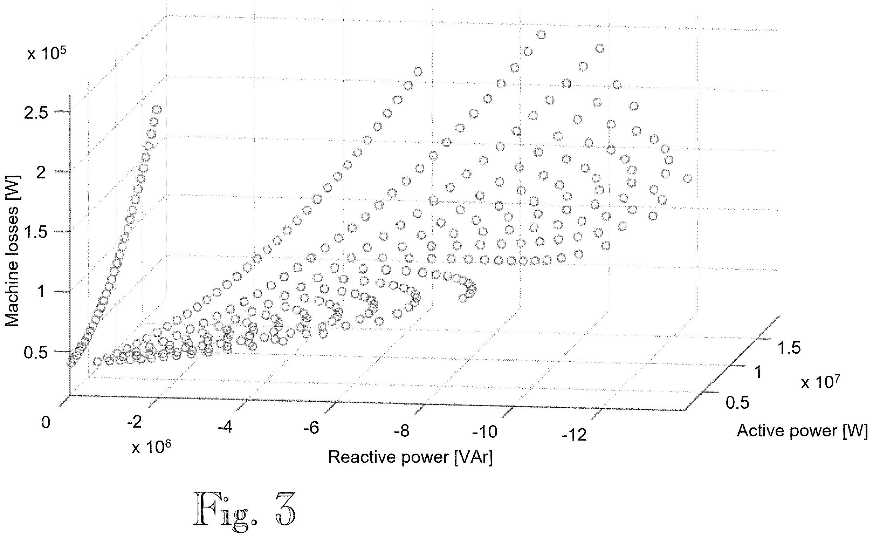

Generally the reactive power production or consumption causes additional losses to system e.g. because of increased copper and iron losses in the synchronous machines and in e.g. transformers that supply those. As the copper losses are generally depending on the conductor resistance and current, the iron losses can be described as a function of flux density. The main behaviour of the losses is clear but a more precise calculation in a specific operation point may require e.g. to use design data together with time consuming finite element method. This would be inconvenient or even impossible in a real time application. Hence, the proposed embodiments are based on an observation that if the losses of each synchronous machine are calculated or generally predetermined in several operation points, e.g. such where the active power varies between no load and full load conditions and reactive power varies in (negative and/or positive) values based on the minimum and maximum excitation current, the results can be presented as loss model. Figure 3 illustrates an example of the losses of a synchronous machine as a function of active and reactive power are shown in a 3D mesh diagram. Thus, in the example, each point (circle) represents an operation point of the synchronous machine. The example of Figure 3 only shows operation points corresponding to negative values of the reactive power. However, the losses in operation points corresponding to positive values of the reactive power can be represented in a similar way. Thus, according to an embodiment, the losses of a synchronous machine as a function of the active and reactive power are preferably determined in a plurality of operating points corresponding to negative values of the reactive power and/or in a plurality of operating points corresponding to positive values of the reactive power.

According to an embodiment, the losses in a single synchronous machine can be determined as follows. The performance calculation can be done during the machine design phase, or it can be done afterwards for an old machine, for example, at least as long as the relevant machine manufacturing information is available. The calculation procedure does not necessarily differ from typical performance calculations that may be done e.g. during conventional delivery process of such a machine and therefore e.g. the same calculation tools could be used. Each point in exemplary Figure 3 defines the total loss of the machine with specific active and reactive power loading of the machine. As the system is continuous and there are no local minimum or maximum values (derivative is always positive), the total losses of the machine can thus be expressed by a suitable loss model, such as a regression model, reflecting these features. According to an embodiment, the regression model may be a polynomial regression model. And according to an embodiment, the polynomial regression model may be a quadratic polynomial regression model. The loss model could be defined both for positive values of the reactive power and for negative values of the reactive power, e.g. as one loss model or separately as two partial loss models, if appropriate, or the loss model could be defined only for positive or negative values of the reactive power of the synchronous machine, for example.

In the exemplary quadratic polynomials used in the example below the total losses, L, may be expressed as a function of active and reactive power, P and Q, as follows:

$$L = A + BP + CQ + DP^2 + EPQ + FQ^2 \qquad (1)$$

where $A, B, ..., F,$ are regression coefficients to be determined.

It should be noted, however, that the proposed solution is not limited to polynomials or their degree but instead any appropriate model could be used. For example, polynomial functions with their degree two or higher or with rational functions, power functions or with exponential functions or any other function that describes system behaviour could be used.

If the total number of calculated operation points is $n,$ the equation can be written for each point in a matrix form as:

$$\begin{pmatrix} 1 & P_1 & Q_1 & P_1^2 & P_1Q_1 & Q_1^2 \\ 1 & P_2 & Q_2 & P_2^2 & P_2Q_2 & Q_2^2 \\ & & & \vdots & & \\ 1 & P_n & Q_n & P_n^2 & P_nQ_n & Q_n^2 \end{pmatrix} \begin{pmatrix} A \\ B \\ C \\ D \\ E \\ F \end{pmatrix} = \begin{pmatrix} L_1 \\ L_2 \\ \vdots \\ L_n \end{pmatrix} \qquad (2)$$

Or simply as:

$$\mathcal{A}x = b \qquad\qquad (3)$$

Since the number of operating points is much higher than the number of unknown variables, the system is overdetermined and can be solved by the method of least squares:

$$\min_{x} |\mathcal{A}x - b| \quad \Leftrightarrow \quad x = (\mathcal{A}^T \mathcal{A})^{-1} \mathcal{A}^T b \qquad\qquad (4)$$

The regression coefficients in equation (1) can be solved separately for each synchronous machine, e.g. during the design and manufacturing phase thereof or at another suitable time. If an industrial network includes $m$ machines that all differ from each other, the total losses of the system are obtained by summing over the individual contributions:

$$L_{tot} = \sum_{k=1}^{m} L_k \qquad\qquad (5)$$

where:

$$L_k = A_k + B_k P_k + C_k Q_k + D_k P_k^2 + E_k P_k Q_k + F_k Q_k^2 \qquad\qquad (6)$$

is the kth loss model.

The active power of each synchronous machine generally depends on the shaft load and can be known from real time measurements, for example. On the other hand, the total reactive power $Q_{tot}$ that is needed from the system is a sum of reactive power of all the machines:

$$Q_{tot} = \sum_{k=1}^{m} Q_k \qquad\qquad (7)$$

According to an embodiment, the goal may be to minimize the total losses of the system by sharing the total reactive power demand between all the synchronous machines which are operating with known shaft powers, for example. To be more specific, the mathematical statement of the optimization problem may be e.g. the following: given the parameters $A_k, B_k, ..., F_k$, the active powers $P_k$, and the total reactive power $Q_{tot}$, find the individual reactive powers $Q_k$ for $k$ = 1, 2, ..., m, by minimizing (5) subject to (7).

There are several well-known methods for solving constrained optimization problems of this form. According to an embodiment, the method of Lagrange multipliers may be used, for example. However, the optimization method could, instead of Lagrange multipliers, also be e.g. penalty functions, potential reduction methods, path-following methods or any other suitable optimization method. According to an embodiment, instead of minimizing the losses directly, the Lagrangian may be considered:

$$\mathcal{L}(Q_1, Q_2, \ldots, Q_m, \mu) = \sum_{k=1}^{m} L_k(Q_k) + \mu(\sum_{k=1}^{m} Q_k - Q_{tot}) \qquad\qquad (8)$$

where $\mu$ is the Lagrange multiplier for the constraint on reactive powers. According to an embodiment, the constrained minimization problem may be transformed into an unconstrained saddle point problem which can be solved by linear algebra. It can be shown that the minimizer of $L_{tot}$ is characterized by the conditions:

$$\frac{\partial \mathcal{L}(Q_1, Q_2, \ldots, Q_m, \mu)}{\partial Q_1} = 0 \qquad\qquad (9)$$

$$\frac{\partial \mathcal{L}(Q_1, Q_2, \ldots, Q_m, \mu)}{\partial Q_2} = 0 \qquad (10)$$

$$\vdots$$

$$\frac{\partial \mathcal{L}(Q_1, Q_2, \ldots, Q_m, \mu)}{\partial Q_m} = 0 \qquad (11)$$

$$\frac{\partial \mathcal{L}(Q_1, Q_2, \ldots, Q_m, \mu)}{\partial \mu} = 0 \qquad (12)$$

In the exemplary case these conditions can simplify to the following equilibrium equations:

$$L_1'(Q_1) + \mu = 0 \qquad (13)$$

$$L_2'(Q_2) + \mu = 0 \qquad (14)$$

$$\vdots$$

$$L_m'(Q_m) + \mu = 0 \qquad (15)$$

$$Q_1 + Q_2 + \cdots + Q_m = Q_{tot} \qquad (16)$$

where

$$L_k'(Q_k) = \frac{dL_k(Q_k)}{dQ_k} \qquad (17)$$

It can be pointed out that the physical interpretation of the Lagrange multiplier $\mu$ is the sensitivity of $L_{tot}$ with respect to $Q_{tat}$.

Since the exemplary loss models (1) and (6) are quadratic, the equations (13)-(16) are linear and could be solved directly for $Q_1$, $Q_2$,...$Q_m$ and $\mu$. Instead, according to an embodiment, a more general approach may be adopted which may work also for higher order polynomials and more detailed non-linear models, for example.

Let us approximate the solution numerically by a series of successive linearizations. According to an embodiment Newton-Raphson iteration may be used, for example. The method is defined by linearizing the losses about a given operation point $Q_1{}^*$, $Q_2{}^*$,...$Q_m{}^*$ and $\mu^*$ by writing

$$L_k'(Q_k) \approx L_k'(Q_k^*) + L_k''(Q_k^*)(Q_k - Q_k^*) \qquad (18)$$

$$\mu = \mu^* + (\mu - \mu^*) \qquad (19)$$

Substituting (18) and (19) in (13)-(16) gives

$$L_1''(Q_1^*)(Q_1 - Q_1^*) + (\mu - \mu^*) = -L_1'(Q_1^*) - \mu^* \qquad (20)$$

$$L_1''(Q_2^*)(Q_2 - Q_2^*) + (\mu - \mu^*) = -L_1'(Q_2^*) - \mu^* \qquad (21)$$

$$\vdots$$

$$L_m''(Q_m^*)(Q_m - Q_m^*) + (\mu - \mu^*) = -L_m'(Q_m^*) - \mu^* \qquad (22)$$

and

$$(Q_1 - Q_1^*) + (Q_2 - Q_2^*) + \cdots + (Q_m - Q_m^*) = Q_{tot} - Q_1^* - Q_2^* - \cdots - Q_m^* \qquad (23)$$

These equations can be written in matrix form as

$$\begin{bmatrix} L_1''(Q_1^*) & 0 & \cdots & 0 & 1 \\ 0 & L_2''(Q_2^*) & & 0 & 1 \\ \vdots & & \ddots & & \\ 0 & 0 & & L_m''(Q_m^*) & 1 \\ 1 & 1 & \cdots & 1 & 0 \end{bmatrix} \begin{bmatrix} Q_1 - Q_1^* \\ Q_2 - Q_2^* \\ \vdots \\ Q_m - Q_m^* \\ \mu - \mu^* \end{bmatrix}$$

$$= - \begin{bmatrix} L_1'(Q_1^*) + \mu^* \\ L_2'(Q_2^*) + \mu^* \\ \vdots \\ L_m'(Q_m^*) + \mu^* \\ Q_1^* + Q_2^* + \cdots + Q_m^* - Q_{tot} \end{bmatrix} \qquad (24)$$

According to an embodiment, it is possible now to choose $Q_1^*$, $Q_2^*$,...$Q_m^*$ and $\mu^*$ (a good initial guess may be obtained by distributing $Q_{tot}$ uniformly over all the machines, for example) and determine a refined approximation $Q_1$, $Q_2$,...$Q_m$ and $\mu$ by solving (24). The process shall be preferably repeated with $(Q_1, Q_2,...Q_m, \mu) \rightarrow (Q_1^*, Q_2^*,...Q_m^*, \mu^*)$ until the residual (norm of the right hand side) becomes small enough.

Instead of the Newton-Raphson iteration also other methods could be used. For example, the same problem could also be solved with any other commonly known root-finding algorithms, for example iterative methods like Newton-Raphson, interpolation methods like Steffenson, or bracketing methods like Bisection.

It is possible that the optimum is outside a feasible range of one or more of the synchronous machines and they may be unable to fulfil the required individual reactive power demand. In this case the above method could be supplemented with additional constraints if needed. For example:

$$Q_k^{lower} \le Q_k \le Q_k^{upper} \qquad (25)$$

However, there are several well-known methods for handling constraints of this type, which are not considered in more detail here. As an example, the constraints could be handled with linear programming or nonlinear programming.

According to an embodiment, the proposed solution to optimize the efficiency of the parallel connected synchronous machines allocated to the reactive power compensation according to any one of the embodiments described above, or any combination thereof, could be used for example in an arrangement with reference to exemplary Figure 2 comprising one or more of the following:

1. The losses of each synchronous machine 100A, 100B, 100C that is allocated to the reactive power compensation may be determined as a function of the active and the reactive power in several operation points as exemplified in Figure 3. The losses may be further expressed in format of a polynomial function that has at least two independent variables, the active and the reactive power. The fixed coefficients for these functions can be determined with any known curve fitting method, for example.

2. During a suitable instant of time, such as the commissioning of the system, these machine specific coefficients for the polynomial function that express the losses of the synchronous machine may be parametrized to the excitation control system 101A, 101B, 101C of the synchronous machine. Each of the excitation control systems includes the coefficients of the respective synchronous machine that to be controlled.

3. One of the excitation control systems 101A, 101B, 101C may be set (selected, configured) as a master device, which determines the optimal individual reactive power demand for each synchronous machine. The master device may be programmed to include e.g. bicubic polynomial function to estimate the losses of the synchronous machine as a function of the active and reactive power of the machine.

4. All the excitation control systems 101B, 101C are configured to communicate with the master excitation control system 101A. The communication can be done via field bus (Profibus DB, CAN etc.) and/or Ethernet based communication (Modbus TCP, EtherCat, Powerlink CC), for example. The communication can be limited to the reactive power demand and information related to that such as actual active power and reactive power communicated from the machines and excitation systems thereof to the master excitation control system (or another entity implementing the determination of the individual reactive power demands for the plurality of the synchronous machines) or it can include also other operational parameters of the machines and excitation systems thereof, for example.

5. An external upper-level control system 40, such as SCADA / DCS system sends the total reactive power demand to the master device 101A. This reference could be sent e.g. via fieldbus, ethernet based protocols or in case of legacy systems, with analogue mA or V signals or by any other suitable communication method.

6. The master device 101A monitors continuously, or at predetermined intervals, the other excitation control systems to receive at least some of the following machine-specific data:

a. Machine operation status (Running / Stopped).
b. Excitation control mode (VAr / Else).
c. Active power.
d. Reactive power.
e. Coefficients for reactive power production.
f. Limitations for reactive power production.

7. Based on the information collected or received from the excitation control systems and/or machines connected to the systems, the master device may define the individual reactive power demand to each machine such that the sum of the produced or consumed reactive power corresponds to the total reactive power demand received from the upper-level control system 40 yet so that the total losses are being minimized according to any of the embodiments described above.

8. The individual reactive power demand calculation may be updated continuously such that the active power may change between the synchronous machines as well as the changes in machine status can be taken into account and a new individual reactive power demand can be determined accordingly.

The proposed solution according to any one of the embodiments described herein, or any combination thereof, could be used in any kind of electric system comprising a plurality of synchronous machines that may produce active and reactive power independently. One example could be a wind park that may produce always active power to a grid, depending on the wind conditions, but also reactive power depending on the voltage stability of the grid, for example. As the active power production between the units may vary e.g. because of the geographic location, also the reactive power demand can be adjusted to minimize the losses. Another example of a possible application is a power plant that contains several parallel generator units driven by piston engines.

The proposed solution, according to the various embodiments thereof, may provide various advantages. The proposed solution may enable to use all the available capacity of the synchronous machines for the reactive power compensation. The proposed solution may minimize the losses caused by the reactive power compensation performed by the synchronous machines. The proposed solution is easy to implement for the existing devices and networks. The upper-level control system, such as SCADA / DCS, needs to generate only one reference signal that may be common for all the synchronous machines. The proposed solution does not require time consuming programming of the upper-level control system. The proposed solution can be pre-configured in the excitation control system before the commissioning thereof. The proposed solution is not limited to any specific type of excitation or any specific excitation controller hardware.

The control arrangement, or generally control means, implementing the control functionality according to any one of the above embodiments, or any combination thereof, may be implemented as one unit or as two or more separate physical units that are configured to implement the functionality of the various embodiments. Herein the term 'unit' generally refers to a physical or logical entity, such as a physical device or a part thereof or a software routine. The control arrangement according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system, which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), fieldprogrammable gate arrays (FPGA) and/or discrete electric components and devices for implementing the functionality according to any one of the embodiments.

Many electric devices, such as excitation control systems of synchronous machines, and components thereof may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any clientreadable distribution/-data storage medium or memory unit(s) or article(s) of manufacture, comprising program instructions executable by one or more processors/computers, which instructions, when loaded into an apparatus, constitute the control arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 3 and any combination thereof, may be an element that comprises one or more arithmetic logic units, a number of special registers and control circuits.

It will be obvious to a person skilled in the art that, as the technology advances, the inventive concept can be implemented in various ways. Further, it is clear to a person skilled in the art that the described exemplary embodiments may, but are not required to, be combined with other exemplary embodiments in various ways. The invention and its embodiments are not limited to the examples described above but may vary within the scope of the claims. If any of the exemplary embodiments and/or features described herein should not fall under the scope of the independent claims, those are to be interpreted as examples useful for understanding various embodiments of the invention.

**Claims**

1. A computer implemented method for controlling an electric system, the electric system comprising a plurality of synchronous machines, the method comprising:

   a) obtaining a total reactive power demand for the plurality of the synchronous machines, wherein the total reactive power demand indicates a total reactive power to be produced or consumed by the plurality of the synchronous machines; and

   b) in response to a magnitude of the obtained total reactive power demand being lower than a magnitude of a maximum reactive power demand able to be fulfilled by the plurality of the synchronous machines performing the following:

   obtaining an individual active power of each of the plurality of the synchronous machines;
   determining an individual reactive power demand for each of the plurality of the synchronous machines, such that a sum of the individual reactive power demands for the plurality of the synchronous machines equals to the obtained total reactive power demand and such that a total power loss of the plurality of the synchronous machines is minimized, on the basis of at least the obtained individual active powers of the plurality of the synchronous machines and a predetermined individual loss model of each of the synchronous machines, wherein the individual loss model expresses a power loss of the synchronous machine as a function of active power and reactive power of the synchronous machine; and

controlling each of the plurality of the synchronous machines to fulfil the individual reactive power demand determined for the synchronous machine in question.

2. A computer implemented method as claimed in claim 1, wherein step b) further comprises:

in response to the magnitude of the obtained total reactive power demand being equal to or higher than the magnitude of the maximum reactive power demand able to be fulfilled by the plurality of the synchronous machines controlling the plurality of the synchronous machines to fulfil the reactive power demand only up to a magnitude thereof able to be fulfilled by the plurality of the synchronous machines.

3. A computer implemented method as claimed in claim 1 or 2, wherein steps a) to b) are repeated essentially continuously or at predetermined intervals.

4. A computer implemented method as claimed in claim 1, 2 or 3, wherein the individual loss model of the synchronous machine is a regression model based on a set of predetermined operation points of the synchronous machine, wherein a predetermined operation point is defined by the active power, the reactive power and the power loss of the synchronous machine.

5. A computer implemented method as claimed in claim 4, wherein the regression model is a polynomial regression model.

6. A computer implemented method as claimed in claim 5, wherein the polynomial regression model is a quadratic polynomial regression model.

7. A computer implemented method as claimed in any one of claims 1 to 6, wherein the determining of the individual reactive power demand for each of the plurality of the synchronous machines is performed by optimization.

8. A computer implemented method as claimed in claim 7, wherein the optimization is performed by using the method of Lagrange multipliers.

9. A computer program product comprising program instructions which, when run by a computing apparatus, cause the computing apparatus to carry out a method as claimed in any one of claims 1 to 8.

10. An apparatus for controlling an electric system, the electric system comprising a plurality of synchronous machines, the apparatus comprising:

means configured to obtain a total reactive power demand for the plurality of the synchronous machines, wherein the total reactive power demand indicates a total reactive power to be produced or consumed by the plurality of the synchronous machines; and

means configured to, in response to a magnitude of the obtained total reactive power demand being lower than a magnitude of a maximum reactive power demand able to be fulfilled by the plurality of the synchronous machines, perform the following:

obtain an individual active power of each of the plurality of the synchronous machines;

determine an individual reactive power demand for each of the plurality of the synchronous machines, such that a sum of the individual reactive power demands for the plurality of the synchronous machines equals to the obtained total reactive power demand and such that a total power loss of the plurality of the synchronous machines is minimized, on the basis of at least the obtained individual active powers of the plurality of the synchronous machines and a predetermined individual loss model of each of the synchronous machines, wherein the individual loss model expresses a power loss of the synchronous machine as a function of active power and reactive power of the synchronous machine; and

control each of the plurality of the synchronous machines to fulfil the individual reactive power demand determined for the synchronous machine in question.

11. An apparatus as claimed in claim 10, further comprising means configured to carry out a method as claimed in any one of claims 2 to 8.

12. An electric system comprising:

   a plurality of synchronous machines; and
   at least one apparatus configured to perform a method as claimed in any one of claims 1 to 8.

13. An electric system as claimed in claim 12, wherein the plurality of synchronous machines comprises at least one synchronous motor and/or at least one synchronous generator.

14. An electric system as claimed in claim 12 or 13, wherein the plurality of synchronous machines comprises at least one synchronous machine with a static excitation and/or at least one synchronous machine with a brushless excitation.

15. An electric system as claimed in claim 12, 13 or 14, wherein the at least one apparatus comprises an excitation control system for one of the plurality of synchronous machines.

excitation

110

100

excitation

110

100

excitation

110

100

30

20

10

200

Fig. 1

Operator — Total Var ref — 40

Control 1
PLC
AVR
Relay
Var ref 1
101A

Machine 1
Excitation
110A
100A
100B

Control 2
PLC
AVR
Relay
Var ref 2
Values of machine 2
101B

Machine 2
Excitation
110B

Control 3
PLC
AVR
Relay
Var ref 3
Values of machine 3
101C

Machine 3
Excitation
110C
100C

**Fig. 2**

Fig. 3

EP 4 668 527 A1

Europäisches
Patentamt

European
Patent Office

Office européen
des brevets

# EUROPEAN SEARCH REPORT

**Application Number**

EP 24 18 3115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/260488 A1 (AL-HAMRANI MAJED [SA]) 23 December 2004 (2004-12-23) * figure 6 * * paragraphs [0002] - [0006], [0043] - [0061], [0093] * | 1-15 | INV. H02J3/38 H02J3/50 |
| A | CN 112 736 990 A (HANDAN IRON & STEEL GROUP CO LTD ET AL.) 30 April 2021 (2021-04-30) * abstract * | 1-15 | |
| A | TRUMMAL TARMO ET AL: "Optimal Reactive Power Control in a Multi-Machine Thermal Power Plant", 2020 21ST INTERNATIONAL SCIENTIFIC CONFERENCE ON ELECTRIC POWER ENGINEERING (EPE), IEEE, 19 October 2020 (2020-10-19), pages 1-6, XP033867735, DOI: 10.1109/EPE51172.2020.9269239 [retrieved on 2020-11-23] * the whole document * | 1-15 | |

TECHNICAL FIELDS
SEARCHED (IPC)

H02J

The present search report has been drawn up for all claims

| Place of search | Date of completion of the search | Examiner |
|---|---|---|
| Munich | 8 November 2024 | Berger, Josef |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3115

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2024

| Patent document cited in search report | | Publication date | Patent family member(s) | | Publication date |
|---|---|---|---|---|---|
| US 2004260488 | A1 | 23-12-2004 | US 2004260488 A1 | | 23-12-2004 |
| | | | WO 2005001591 A1 | | 06-01-2005 |
| CN 112736990 | A | 30-04-2021 | NONE | | |

EPO FORM P0459

For more details about this annex : see Official Journal of the European Patent Office, No. 12/82